# EUROPÄISCHE PATENTANMELDUNG

(11) **EP 4 672 594 A1**
(43) Veröffentlichungstag der Anmeldung: **31.12.2025**
(21) Anmeldenummer: 25182892.7
(22) Anmeldetag: 16.06.2025
(51) Int. Cl.: H02P 29/62, H02K 15/12

(54) **DREHSTROMMASCHINE, HYDRAULIKPUMPE UND EIN VERFAHREN ZUM BETREIBEN DERSELBEN**

(30) Priorität: 24.06.2024 DE 102024117700
(71) Anmelder: KNORR-BREMSE Systeme für Nutzfahrzeuge GmbH, 80809 München (DE)
(72) Erfinder: BONTINCK, Zeger, 75417 Mühlacker (DE); BARABASI, Richárd, 1203 Budapest (HU); BARTHEL, Dieter, 63517 Rodenbach (DE)

(57) **Zusammenfassung**

Eine Drehstrommaschine ist offenbart, die zumindest teilweise in einem Fluid läuft und einen Stator (110) mit zumindest drei Spulen (111, 112, 123) und einen Rotor (120) mit zumindest einem Magneten (125) aufweist. Der Rotor (120) ist von den zumindest drei Spulen (111, 112, 123) in einer Querschnittsebene senkrecht zu seiner Drehachse (R) umgeben. Die Drehstrommaschine umfasst eine Steuereinrichtung (130), die ausgebildet ist, um die drei Spulen (111, 112, 113) selektiv mit drei Wechselströmen zu bestromen; einen Arbeitsmodus (132) auszulösen, in dem drei Wechselströme ein Drehmoment auf den Rotor (120) um die Drehachse (R) erzeugen; einen Heizmodus (134) auszulösen, in dem die drei Wechselströme eine im Vergleich zum Arbeitsmodus (132) erhöhte Verlustleistung durch einen schnelleren Polaritätswechsel bei zumindest einem der drei Wechselströme erzeugen.

## Beschreibung

Die vorliegende Erfindung bezieht sich auf eine Drehstrommaschine, eine Hydraulikpumpe und ein Verfahren zum Betreiben der Drehstrommaschine und insbesondere auf eine Heizfunktion für Elektromotoren unter Nutzung von Eisen- bzw. Hysterese-Verlusten und/oder von Ohm'scher Verlusten beim Anregen der Spulen in dem Elektromotor oder allgemein in einer Drehstrommaschine.

Die Selbsterwärmung von E-Motoren wird hauptsächlich durch die Ohm'sche Verluste in den Kupferteilen (z. B. Spulen, Käfig, ...) verursacht. Diese Erwärmung ist in der Regel nicht erwünscht, da die Energie nur ineffizient genutzt wird und sie zu einer Überhitzung des E-Motors führen kann. In einigen Anwendungen wie beispielsweise von E-Motoren, die in Öl/Hydraulikflüssigkeit bzw. bei bestimmten Umgebungsbedingungen (z.B. bei kalten Temperaturen) betrieben werden, kann dieser Wärmeeffekt jedoch genutzt werden, um die Hydraulikflüssigkeit in dem Motor zu erwärmen. Durch das Erwärmen die Spulen erwärmt sich die Hydraulikflüssigkeit, wodurch sich ihre Viskosität verringert, was wiederum zu einer geringeren Reibung führt. Der Motor benötigt daher weniger Drehmoment, um diese Reibung zu überwinden. Ein solcher Motor ist beispielsweise in WO 202/173755 A1 beschrieben. Um auch bei kalten Temperaturen funktionsfähig zu bleiben, wird normalerweise bei solchen Anwendungen die Oberfläche des Rotors so gestaltet, dass die Reibung mit der Flüssigkeit so gut wie möglich reduziert wird. Dies führt aber zu einem komplexeren Werkzeugbau für die Rotorbleche.

Der Aufwärmeffekt ist daher durchaus sinnvoll, hat danach aber nur Nachteile. Aus diesem Grund werden normalerweise bei der Motorkonstruktion die Ohm'schen Verluste so gering wie möglich gehalten, um die fortlaufende Erwärmung von E-Motoren zu reduzieren und den Wirkungsgrad des Motors dadurch zu erhöhen. Dies wird dadurch erreicht, dass der Innenwiderstand, z. B. der Spulen, so gering wie möglich gehalten wird.

Leider verringert diese Konstruktionsentscheidung die positive Auswirkung der Ohm'schen Verluste bei der Selbsterhitzung bei niedrigen Temperaturen. Daher besteht ein Bedarf nach neuen Motorkonstruktionen, die einen Kompromiss zwischen einer effizienten Aufwärmung und möglichst wenig Verlusten nach der Aufwärmung bieten.

Zumindest ein Teil der obengenannten Probleme wird durch eine Drehstrommaschine nach Anspruch 1, eine Hydraulikpumpe nach Anspruch 7, und ein Verfahren nach Anspruch 10 gelöst. Die abhängigen Ansprüche definieren weitere vorteilhafte Ausführungsformen der Gegenstände der unabhängigen Ansprüche.

Die vorliegende Erfindung bezieht sich auf eine Drehstrommaschine, die zumindest teilweise in einem Fluid läuft und einen Stator mit zumindest drei Spulen und einen Rotor mit zumindest einem Magneten aufweist. Der Rotor ist von den zumindest drei Spulen in einer Querschnittsebene senkrecht zu seiner Drehachse umgeben. Die Drehstrommaschine umfasst außerdem eine Steuereinrichtung, die ausgebildet ist, um:
- die drei Spulen selektiv mit drei Wechselströmen zu bestromen,
- einen Arbeitsmodus auszulösen, in dem drei Wechselströme ein Drehmoment auf den Rotor um die Drehachse erzeugen,
- einen Heizmodus auszulösen, in dem die drei Wechselströme eine im Vergleich zum Arbeitsmodus erhöhte Verlustleistung durch einen schnelleren Polaritätswechsel bei zumindest einem der drei Wechselströme erzeugen.

Es versteht sich, dass durch jeden der drei Spulen ein separater Wechselstrom fließen kann, wobei die Wechselströme hinsichtlich Phase, Periode und Amplitude durch die Steuereinrichtung steuerbar sind und zusammen einen Drehstrom aus drei Phasen bilden. Die von den Spulen erzeugten Magnetfelder überlagern sich zu einem drehenden Magnetfeld, welches die Drehbewegung des Rotors antreibt (im Arbeitsmodus). Es versteht sich außerdem, dass der Arbeitsmodus und der Heizmodus auch überlagert sein können, da die einzelnen Wechselströme überlagert werden können, so dass zum Beispiel ein Aufwärmen vor Fahrtantritt (bei Stillstand) und ein abschließendes Aufwärmen auf eine optimale Betriebstemperatur auch während der Fahrt erfolgen kann.

Auch im Heizmodus können Kräfte auf den Rotor bzw. den Magneten wirken, jedoch können die Ströme so gewählt werden, dass sich die Drehkräfte zu Null kompensieren. Es können aber Kräfte in radialer Richtung des Magneten oder in axialer Richtung des Magnetflusses im Rotor (z.B. des Magneten) wirken. Diese (radialen) Kräfte erzeugen aber kein Drehmoment, durch das Umpolarisieren allerdings Wärme.

Gemäß Ausführungsbeispielen handelt es sich bei der Drehstrommaschine um eine Radialflussflussmaschine, wo der magnetische Fluss in radialer Richtung durch die Spulen verläuft.

Optional ist die Steuereinrichtung ausgebildet, um die Drehstrommaschine alternativ im Arbeitsmodus oder im Heizmodus zu betreiben, wobei im Heizmodus kein Drehmoment erzeugt. Der Wechselstrom erzeugt nur eine Verlustleistung. Insbesondere kann der Heizmodus auch nur vor Fahrtantritt ausgeführt werden. So kann gemäß Ausführungsbeispielen in einem Fahrzeug, welches die Drehstrommaschine aufweist, beim Einschalten der Zündung zunächst eine Temperatur des Fluids erfasst werden und, falls ein Aufheizen des entsprechenden Aggregates (z.B. eine Hydraulikpumpe oder eine Lenkunterstützung) angeraten ist, kann die Steuereinrichtung basierend auf der erfassten Temperatur zunächst den Heizmodus starten. Beim Erreichen einer Betriebstemperatur kann eine Rückmeldung an den Fahrer erfolgen, so dass dann ein Übergang in den Arbeitsmodus geschehen kann bzw. das Fahrzeug in Betrieb gesetzt werden kann.

Optional ist die Drehstrommaschine an eine Quelle für eine Gleichspannung anschließbar, wobei die Steuereinrichtung weiter ausgebildet ist, um die Gleichspannung mit wechselnden Polaritäten an die zumindest drei Spulen anzulegen und eine Flankensteilheit beim Wechsel der Polarität im Heizmodus im Vergleich zum Arbeitsmodus zu ändern (erhöhen der verringern).

Optional ist die Steuereinrichtung ausgebildet ist, um die Gleichspannung mit den wechselnden Polaritäten durch eine Pulsweitenmodulation (Tastverhältnis zwischen Spannung und keiner Spannung) gesteuerter Amplituden an die zumindest drei Spulen anzulegen. Hierbei werden drei unterschiedliche Spannungen angelegt. Durch diese drei Spannungen kann ein Strom-Vektor erzeugt werden, ohne ein Drehmoment zu erzeugen.

Drehstrommaschinen arbeiten üblicherweise mit dreiphasigen Wechselströmen, die zueinander um 120° phasenversetzt sind. Die Spannungsverläufe weisen beispielsweise eine trapezförmige Gestalt auf, die zwischen einer Pluspolarität und einer Minuspolarität wechseln, wobei der Gleichstrom mit dem positiven Pol während einer Phase angelegt wird und zeitlich versetzt dazu in einer weiteren Phase der Gleichstrom mit dem negativen Pol an eine andere Spule angelegt wird. Die verbleibende Spule befindet sich zu dieser Zeit im Leerlauf, wo beispielsweise keine Spannung an der Spule anliegt (sogenannten Schwimmzustand). Die Heizleistung kann nun dadurch eingestellt werden, dass Übergänge von der positiven Polarität zur negativen Polarität oder umgekehrt verlängert oder verkürzt werden. Damit weisen die Übergangsphasen eine größere oder kleinere Flankensteilheit auf. Die Flankensteilheit führt dazu, dass eine schnellere Ummagnetisierung in den magnetischen Materialien der Drehstrommaschine erfolgt, was wiederum zu höheren Verlusten führt und somit die gewünschte Wärme erzeugt.

Gemäß Ausführungsbeispielen kann der Zeitpunkt des Nulldurchgangs gleichbleiben, die Flanke braucht nur gedreht zu werden. Mit anderen Worten, die Einschaltphasen als Ganzes brauchen nicht verschoben zu werden, sondern brauchen nur symmetrisch auf beiden Seiten verlängert zu werden. Damit werden die Ausschaltphase, wo keine Spannung anliegt, kürzer, was wiederum eine schnellere Umpolarisierung erzwingt.

Optional sind die drei Wechselströme in einem mit dem Rotor beweglichen Koordinatensystem in einen d-Strom und einen q-Strom kombinierbar. Der d-Strom erzeugt einen Magnetfluss, der kein Drehmoment im Rotor erzeugt und kann daher auch als Heizstrom angesehen oder bezeichnet werden. Der q-Strom erzeugt einen Magnetfluss, der ein Drehmoment im Rotor bewirkt und kann daher auch als Arbeitsstrom (Drehstrom) angesehen oder bezeichnet werden. Die Steuereinrichtung kann dann ausgebildet sein, um im Heizmodus (nur) den d-Strom (Heizstrom) zu erzeugen. Der Motor erzeugt somit keine Drehkraft. Es versteht sich, dass der q-Strom und der d-Strom sich aus verschiedenen Teilströmen durch die einzelnen Spulen zusammensetzen kann es.

Gemäß Ausführungsbeispielen kann somit über eine Steuerung des d-Stroms die Heizleistung gesteuert werden, während über eine Steuerung des q-Stroms das Drehmoment und somit die Drehleistung der Drehstrommaschine gesteuert werden kann.

Optional weist der Stator und/oder der Rotor eine Motor-Lamination aus eines der folgenden Materialien aufweist: Kohlenstoffstahl, Edelstahl, Manganstahl, Siliziumstahl, M12- oder M15-Silkonstahlbleche. So können Siliziumstahlbleche niedrigster Qualität mit dadurch erhöhten Hystereseverlusten genutzt werden. Die verwendeten Materialien können eher ungünstige elektromagnetische Eigenschaften zugunsten von geringen Kosten aufweisen (wie z.B. M12 oder M15 Siliziumstahlbleche) oder zugunsten von verbesserten mechanischen Eigenschaften (wie z.B. Kohlenstoffstähle oder Edelstähle) aufweisen.

Optional umfasst der Stator und/oder der Rotor eine Motor-Lamination, die an vorbestimmten Stellen Kurzschlüsse zwischen Blechen der Motor-Lamination in axialer Richtung aufweist, um die Wirbelstromverluste kontrolliert zu steigern. Die vorbestimmten Stellen können so bestimmt sein, dass Wirbelströme sich effizient entwickeln können (d.h. einen möglichst gleichmäßiger und geschlossener Stromfluss ergeben).

Gemäß Ausführungsbeispielen werden somit zwar Materialien mit hohen Hysterese-Verluste genutzt, jedoch werden für die elektrischen Leitungen (z.B. in den Spulen) Materialien mit niedrigen Ohm'sche Verluste verwendet (z.B. Kupfer).

Optional umfasst die Steuereinrichtung eine Kühleinrichtung mit Wärmebrücken, die die erzeugte Wärme an den Innenraum abführen. Beispielsweise kann die

Steuereinrichtung eine Leiterplatte umfassen, die mit aktiven elektronischen Komponenten (z.B. Leistungstransistoren) bestückt ist, die ihrerseits eine beträchtliche Menge an Wärme im Betrieb erzeugen. Gemäß Ausführungsbeispielen kann auch diese Wärme für das Aufheizen des Fluids genutzt werden, wozu beispielsweise die Wärmebrücken genutzt werden können.

Optional ist die Drehstrommaschine ein Permanentmagnet-Synchronmotor (PMSM), z.B. mit feldorientierter Regelung. Bei diesem Motor dienen Permanentmagneten als Felderreger. Gemäß weiteren Ausführungsbeispielen kann Drehstrommaschine aber auch ein Asynchronmotor, Reluktanzmotor, BLDCs (Bürstenloser Gleichstrommotor) etc. sein.

Ausführungsbeispiele beziehen sich auch auf eine hydraulische Pumpe für eine Hydraulikflüssigkeit, wobei die Pumpe eine der zuvor beschriebenen Drehstrommaschinen aufweist. Der Innenraum der Drehstrommaschine umfasst einen Teil der Hydraulikflüssigkeit. Außerdem sind Dichtungen ausgebildet, um den Innenraum mit der Hydraulikflüssigkeit von Steuereinrichtung und/oder anderen Komponenten abzudichten. Insbesondere kann die Drehstrommaschine ganz oder teilweise in die Hydraulikflüssigkeit eingetaucht sein.

Die hydraulische Pumpe kann beispielsweise für verschiedene Unterstützungsaggregate eines Fahrzeugs, wie beispielsweise eines LKWs oder eines anderen Nutzfahrzeuges, genutzt werden. Insbesondere beziehen sich Ausführungsbeispiele auch auf eine Servolenkung mit der hydraulischen Pumpe.

Ausführungsbeispiele beziehen sich auch auf ein Fahrzeugsystem mit der zuvor beschriebenen hydraulischen Pumpe und/oder mit der Drehstrommaschine. Das Fahrzeugsystem kann zumindest eines aus dem Folgenden sein: eine Servolenkung, ein Bremssystem, System mit einem Kugelgewindetrieb, Kupplungssteller mit Kugelgewindetrieb.

Ausführungsbeispiele beziehen sich auch auf ein Fahrzeug, insbesondere ein Lastkraftwagen, mit einer Drehstrommaschine und/oder einer Servolenkung und/oder ein Fahrzeugsystem, wie sie zuvor beschrieben wurden.

Ausführungsbeispiele beziehen sich auch auf ein Verfahren zum Ansteuern einer Drehstrommaschine. Das Verfahren umfasst:
- Selektives Bestromen von drei Spulen mit drei Wechselströmen;
- Erzeugen, in einem Arbeitsmodus, eines Drehmomentes am Rotor durch die drei Wechselströme (bzw. durch ein von den Wechselströmen erzeugte magnetische Drehfeld); und
- Auslösen eines Heizmodus, in dem die drei Wechselströme eine im Vergleich zum Arbeitsmodus erhöhte Verlustleistung durch einen schnelleren Polaritätswechsel bei zumindest einem der drei Wechselströme erzeugen.

Beispielsweise kann im Heizmodus gegenüber dem Arbeitsmodus eine erhöhte Amplitude bei zumindest einem der drei Wechselströme erzeugt werden.

Es versteht sich, dass alle zuvor beschriebenen Funktionen der Steuereinrichtung als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann. Daher beziehen sich Ausführungsbeispiele auch auf ein computerlesbares Speichermedium mit darauf gespeicherten Anweisungen, die ausgebildet sind, um die zuvor beschriebene Steuereinrichtung der Drehstrommaschine zu veranlassen, das zuvor beschriebene Verfahren auszuführen, wenn die Anweisungen auf einer Datenverarbeitungseinheit ausgeführt wird.

Vorteilhafte Aspekte von Ausführungsbeispielen können wie folgt zusammengefasst werden. Ausführungsbeispiele lösen zumindest ein Teil der obengenannten technischen Probleme durch eine Nutzung von Eisen- bzw. Hystereseverluste in Blechen der Motor-Lamination als Wärmequelle, um so das Fluid möglichst schnell auf Betriebstemperatur zu bringen. Dabei führt ein schnelles Umschalten des Vorzeichens eines angelegten Gleichstroms zu einem schnellen Polaritätswechsel (von "+" Polarität zu "-" Polarität und umgekehrt). Das wiederum bewirkt schnelle Ummagnetisierungen und somit den gewünschten Hystereverlust. Die nutzbare Verlustwärme hängt von der Geschwindigkeit der Umpolung ab. Gemäß Ausführungsbeispielen werden daher Hystereseverluste gezielt erhöht, während Ohm'scher Verluste (infolge des Ohm'schen Widerstand) kleingehalten werden, da diese ebenfalls in dem Normalbetrieb zu überflüssigen Wärmeverlusten führen.

Hierzu nutzen Ausführungsbeispiele eine intelligente Steuerungstechnik beim Start des Fahrzeugs oder des Systems (z.B. ein hydraulisches Aggregat wie eine Pumpe), um so vorab die Viskosität des Fluid in einem Normbereich zu bringen.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1A: zeigt eine Drehstrommaschine gemäß einem Ausführungsbeispiel der vorliegenden Erfindung.
- Fig. 1B: veranschaulicht die Ansteuerung der Spulen gemäß Ausführungsbeispielen.
- Fig. 2: zeigt eine Querschnittsansicht durch die Drehachse der Drehstrommaschine und die gemäß Ausführungsbeispielen wirkenden Kräfte.
- Fig. 3: zeigt einen Spannungsverlauf aller drei Phasen.
- Fig. 4: zeigt ein schematisches Flussdiagramm eines Verfahrens zur Ansteuerung der Drehstrommaschine gemäß Ausführungsbeispiele.

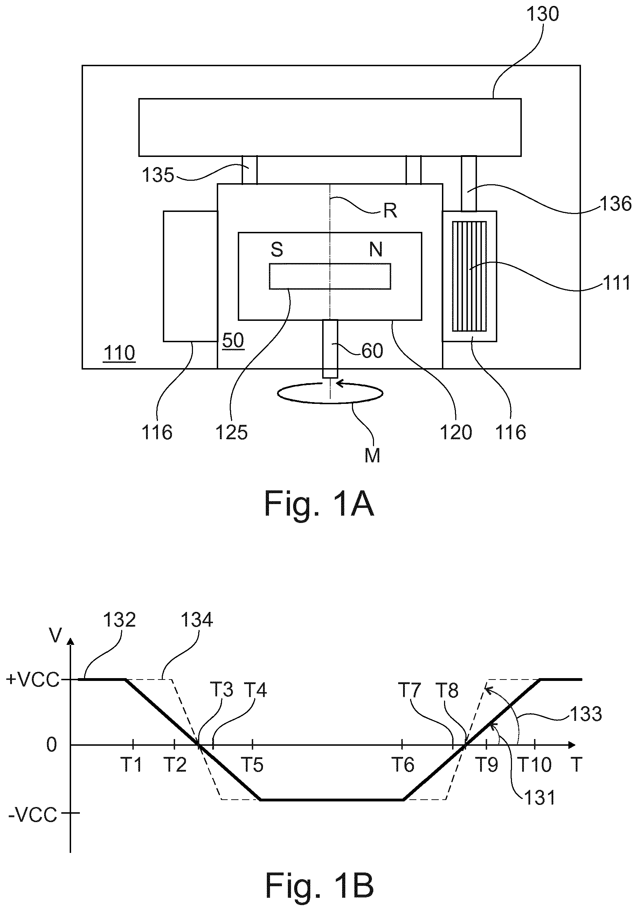

**Fig. 1A** zeigt eine Drehstrommaschine gemäß einem Ausführungsbeispiel der vorliegenden Erfindung. Die Drehstrommaschine umfasst einen Stator 110, einen Rotor 120 und eine Steuereinrichtung 130. Der Stator 110 umfasst zumindest drei Spulen 111, die typischerweise in eine Motor-Lamination 116 eingebettet sind. Der Stator 110 kann fest mit einem Gehäuse der Drehstrommaschine verbunden sein. Der Rotor 120 umfasst zumindest einen Magneten 125 und koppelt an eine Welle 60, mit der der Rotor 120 im Betrieb ein Drehmoment M bereitstellt (z.B. für eine Pumpe oder Servoantrieb). Der Rotor 120 ist in einem Innenraum 50 der Drehstrommaschine drehbar um eine Drehachse R der Welle 60 gelagert. In dem Innenraum 50 kann ein Fluid wie beispielsweise Öl oder eine andere Flüssigkeit vorhanden sein, die eine temperaturabhängige Viskosität aufweist.

In einer Querschnittsebene senkrecht zur Drehachse R sind die zumindest drei Spulen 111 um den Rotor 120 kreisförmig herum angeordnet, beispielsweise mit Winkelabständen von 120° oder 60° (z.B. falls sechs Spulen vorhanden sind). Gemäß weiterer Ausführungsbeispiele umfasst die Drehstrommaschine zumindest drei Stromschienen 136 (busbars) zwischen der Steuereinrichtung 130 und den zumindest drei Spulen 111, um die Spulen 111 selektiv mit drei Wechselströmen zu bestromen. Die Steuereinrichtung 130 ist ausgebildet, um die drei Wechselströme zu steuern. Über einen Stecker am Gehäuse kann die Drehstrommaschine an eine Gleichspannungsquelle angeschlossen werden. Die Gleichspannung kann der Steuereinrichtung zugeführt werden und dort über Schalter (z.B. Leistungstransistoren) in die drei gewünschten Wechselströmen konvertiert werden, die dann über die Stromschienen 136 den Spulen zugeführt werden.

Gemäß weiterer Ausführungsbeispiele umfasst die Drehstrommaschine Wärmebrücken 135 zwischen der Steuereinrichtung 130 und dem Innenraum 50, die eine thermische Kopplung zwischen wärmeerzeugenden Komponenten der Steuereinrichtung 130 (z.B. die Leistungstransistoren) und dem Innenraum 50 bereitstellen, um so einen Wärmefluss von der Steuereinrichtung 130 zu dem Fluid innerhalb des Stators 110 zu bewirken. Auch diese Wärme trägt somit zum schnellen Aufwärmen des Fluids bei.

Die beispielhafte Motor-Lamination 116, in die die zumindest drei Spulen 111 als Umschluss eingebettet sind, bilden auch die Spulenkerne und können geschichtete Metallbleche (z.B. aus Eisen oder Stahl) aufweisen. Die ständigen Ummagnetisierungen im Betrieb sind verlustbehaftet und werden auch als Eisenverluste bezeichnet. Gemäß Ausführungsbeispielen muss nicht zwingend Eisen oder Stahl für die Motor-Lamination 116 verwendet werden, es können auch andere (ferro-) magnetische Materialien genutzt werden. Vorteilhafterweise werden Materialien verwendet, die ausreichend Hystereverluste aufweisen, um eine ausreichende Wärmemeerzeugung steuerbar zu bewirken. Gemäß Ausführungsbeispielen sollen die Hystereseverluste gerade nicht minimiert werden, um ausreichend Wärme zu erzeugen.

**Fig. 1B** veranschaulicht ein Ausführungsbeispiel für die Ansteuerung der drei Spulen 111 durch die Steuereinrichtung 130. Konkret ist eine Spannungsverlauf V als Funktion der Zeit T gezeigt, wobei beispielhaft dieser nur für eine der drei Spulen 111 gezeigt ist. Die Spannung V wechselt zwischen einer positive Versorgungsspannung +VCC und der entsprechenden negativen Versorgungsspannung -VCC, wobei die Versorgungsspannungen +/-VCC zwei Pole einer Gleichspannungsquelle sein können bzw. durch einen optionalen Spannungswandler bereitgestellt werden.

Ein erster Spannungsverlauf 132 (durchgezogene Linie) stellt den normalen Arbeitsmodus dar. Bis zu einem ersten Zeitpunkt T1 liegt an der Spule 111 die Pluspolarität (+ VCC) an. Zum Zeitpunkt T1 wird Verbindung zu +VCC getrennt und die Spannung fällt kontinuierlich ab. Zum fünften Zeitpunkt T5 wird an der Spule 111 die Minuspolarität (- VCC) angelegt. Diese Polarität bleibt bestehen bis zum sechsten Zeitpunkt T6, wo wieder eine Trennung von der Spannungsversorgung stattfindet. Zum zehnten Zeitpunkt T10 wird erneut die Pluspolarität + VCC angelegt, wobei die Spannung zwischen den Zeiten T6 und T10 sich sukzessive erhöht. Das Anlegen und Trennen der Polaritäten, +VCC, -VCC, wird gemäß Ausführungsbeispielen von der Steuereinrichtung 130 gesteuert. Eine Flankensteilheit 131 zwischen den beiden Plus- und Minuspolaritäten braucht durch die Steuereinrichtung 130 nicht angesteuert zu werden, sondern stellt sich automatisch ein. Die entsprechenden Kontakte können in dieser Zeit offen sein ("schwimmend" oder "floating"), sodass sich das elektrische Potential sukzessive ändern wird. Die Flankensteilheit 131 wird jedoch von der Zeitdauer zwischen dem zehnten Zeitpunkt T10 und dem sechsten Zeitpunkt T6 bestimmt. Es ergibt sich somit ein trapezförmiger Wechselstrom für die beispielhafte Spule 111.

Ein zweiter Spannungsverlauf 134 (gestrichelte Linie) veranschaulicht ein Ausführungsbeispiel für eine Ansteuerung der einen Spulen 111 durch die Steuereinrichtung 130 im Heizmodus. In dem Heizmodus steuert die Steuereinrichtung 130 die Wechselströme derart, dass die Spulen eine im Vergleich zum Arbeitsmodus (Spannungsverlauf 132) erhöhte Verlustleistung erzeugen. In dem gezeigten Ausführungsbeispiel wird die erhöhte Verlustleistung durch einen schnelleren Polaritätswechsel bei zumindest einem oder allen drei Wechselströmen bewirkt. Im Heizmodus erfolgt der Polaritätswechsel zwischen einem zweiten Zeitpunkt T2, bis zu dem die Pluspolarität + VCC aufrechterhalten wird, und einem vierten Zeitpunkt T4, wo die Minuspolarität - VCC angelegt wird. Der zweite Zeitpunkt T2 und der vierte Zeitpunkt T4 können beliebig gewählt werden, wobei der schnellere Polaritätswechsel dann erreicht wird, wenn Folgendes gilt: T2>T1 und T4<T5.

Gleiches trifft zu für den Polaritätswechsel von der Minuspolarität zur Pluspolarität, wobei im Heizmodus beispielsweise die Minuspolarität bis zu einem siebenten Zeitpunkt T7 angelegt bleibt und die Pluspolarität an einem neunten Zeitpunkt T9 angelegt wird. Auch der siebte Zeitpunkt T7 und der neunte Zeitpunkt T9 können beliebig gewählt werden, wobei der schnellere Polaritätswechsel dadurch erreicht wird, dass Folgendes gilt: T7>T6 und T9<T10. Als Folge hat sich eine Flankensteilheit 133 beim Polaritätswechsel im Heizmodus im Vergleich zum Arbeitsmodus vergrößert.

Gemäß Ausführungsbeispielen kann der Zeitpunkt des Nulldurchgangs beim Aktivieren des Heizmodus bzw. innerhalb des Heizmodus zeitlich konstant bleiben. In der Fig. 1B geschieht der erste Nulldurchgang für den ersten Spannungsverlauf 132 (Arbeitsmodus) als auch für den zweiten Spannungsverlauf 134 (Heizmodus) zu einem dritten Zeitpunkt T3 (der Spannungswert ist dort Null bzw. entspricht dem Mittelwert der positiven Versorgungsspannung und der negativen Versorgungsspannung). Der zweite Nulldurchgang von der Minuspolarität zur Pluspolarität erfolgt zum achten Zeitpunkt T8, der wiederum sowohl im Arbeitsmodus als auch im Heizmodus gleich sein kann (d.h. zur gleichen Zeit erfolgen kann). Somit kann beim Übergang vom Arbeitsmodus zu dem Heizmodus lediglich die Flankensteilheit 131, 133 gedreht werden, sodass das die Perioden (die Zeitdauern) in den Pluspolarität +VCC gleich bleiben zu den Perioden mit Minuspolarität -VCC, d.h., das Verhältnis der beiden Perioden braucht sich nicht zu ändern, obwohl sich die einzelnen Zeitdauern ändern.

Das muss aber nicht zwingend so sein. Gemäß Ausführungsbeispielen kann die Steuereinrichtung 130 die Polaritätswechsel beliebig auslösen, um beispielsweise eine optimale/maximale Wärmeerzeugung zu bewirken, ohne eine Drehbewegung des Rotors 120 auszulösen.

Die Steuereinrichtung 130 kann weiter ausgebildet sein, einen kontinuierlichen Übergang vom Arbeitsmodus zum Heizmodus und umgekehrt zu bewirken. Wenn im Arbeitsmodus eine Flankensteilheit 131 vorliegt (siehe Fig. 1B), dann kann dieser Winkel im Heizmodus kontinuierlich auf einen neuen Winkel (Flankensteilheit 133) vergrößert werden. Im Arbeitsmodus können die drei Wechselströme beispielsweise derart an den zumindest drei Spulen 111 selektiv angelegt werden, dass zu jedem Zeitpunkt an genau einer Spule eine Pluspolarität anliegt und an genau einer anderen Spule eine Minuspolarität anliegt. Die Zeitdauern des Anliegens der Plus-/Minuspolarität kann einer Winkelbewegung von 120° des Rotors 120 um die Drehachse R entsprechen. Andererseits kann es im Heizmodus Zeiten geben, wo an mehr als einer der Spule 111 die positive (oder negative) Versorgungspannung anliegt. Dementsprechend könne Kräfte in verschiedenen Richtungen wirken (wenn z.B. zwei Spulen zu bestimmten Zeiten anziehend auf den Rotor 120 wirken und nicht nur eine).

Auch dieser Überlapp führt zu Verlusten, da das drehende Magnetfeld geschwächt wird und radiale (Verlust-) Kräfte wirken, sodass Wärme erzeugt wird.

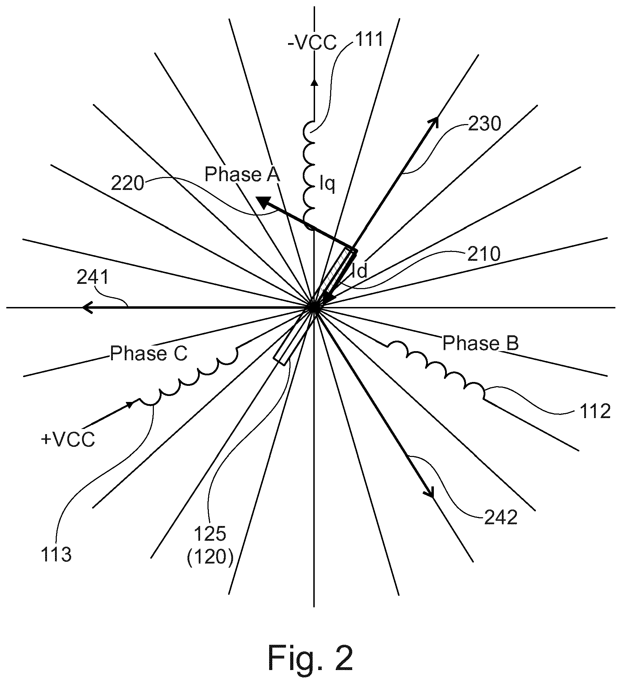

Fig. 2 zeigt eine Querschnittsansicht senkrecht zur Drehachse R und veranschaulicht die wirkenden Kräfte, um das Drehmoment M mit der Drehstrommaschine zu erzeugen. Der Einfachheit halber ist von dem Rotor 120 nur der Magnet 125 dargestellt, um den herum drei Spulen 111,112, 113 im beispielhaften Abstand von 120 ° angeordnet sind. Die drei Spulen umfassen eine erste Spule 111, eine zweite Spule 112 und eine dritte Spule 113, die durch dreiphasigen Drehstrom mit einer Phase A, einer Phase B und einer Phase C anregbar sind.

In dem gezeigten Zustand liegt an der ersten Spule 111 die Minuspolarität -VCC an, an der dritten Spule die Pluspolarität + VCC und die zweite Spule 112 ist spannungsfrei, d.h. die Steuereinrichtung 130 lässt zu dem gezeigten Zeitpunkt das Potential dort frei "schwimmen". Die drei Spulen 111, 112, 113 sind auf einer Seite elektrisch miteinander verbunden, wo beispielsweise das Massepotential oder die Nullspannung anliegt (=Mittelwert von +VCC und -VCC), wobei die Pluspolarität +VCC und die Minuspolarität -VCC an jenen Enden der Spulen 111, 112, 113 anlegbar sind, die nicht miteinander verbunden sind.

Die Drehung des Rotors 120 wird nun dadurch bewirkt, dass an den einzelnen Spulen die Polaritäten sukzessive geändert werden, wodurch sich die Magnetfelder fortlaufend ändern und wechselnde Kräfte auf den Magneten 125 wirken. In dem gezeigten Zustand zieht die erste Spule 111 z.B. den schwarzen Pol des Magneten 125 an und die zweite Spule 113 zieht den weißen Pol des Magneten 125 an. Der Magnet 125 befindet sich im Gleichgewicht, er hat sich an den Flussvektor 230 ausgerichtet. Die Polaritätswechsel führen zu einem drehenden Magnetfeld, dem der Rotor 120 folgt, da der Rotor 120 seine Längsachse immer nach dem (drehenden) magnetischen Flussvektor 230 ausrichtet. Der Flussvektor 230 kann dementsprechend nacheinander auf die neuen Flussvektoren 241, 242 springen, in dies sich der Magnet 125 nacheinander drehen wird. Die fortlaufenden Polaritätswechsel erzeugen Drehkräfte 220 und somit das Drehmoment M, welches auf den Rotor 120 wirkt, beziehungsweise dieser abgeben kann. Der Wechselstrom, der die Drehkräfte 220 erzeugt, wird als q-Strom Iq genannt.

Im Heizmodus kann gemäß Ausführungsbeispielen jedoch an zwei Spulen gleichzeitig die gleiche Polarität, -VCC oder +VCC, anliegen. So kann in der gezeigten Position die zweite Spule 112 nicht "schwimmend" sein, sondern auch auf -VCC liegen kann. Bei den Polaritätswechsel kommt es nun nicht mehr zu einem drehenden Magnetfeld. Es kann zu sprunghaften Veränderungen kommen, denen der Magnet 125 durch eine Drehbewegung jedoch nicht folgen kann. Das bedeutet, dass eine Längskraft 210 erzeugt wird, die keinen Beitrag zur Drehbewegung leistet und einen Energieverlust darstellt und letztlich in Wärme umgewandelt wird. Wenn die Ströme so gewählt werden, dass sich alle Drehkräfte kompensieren und nur noch radiale Kräfte 210 erzeugt werden. Diese Kräfte wirken nur in radialer Richtung eines Polarkoordinatensystem in der Fig. 2, sodass die gesamte Energie in Wärme gewandelt. Dieser Strom wird auch d-Strom Id genannt.

Gemäß Ausführungsbeispielen kann die Steuereinrichtung 130 die Wechselströme so steuern, dass der Rotor 120 innerhalb eines vorbestimmten Winkelbereiches eine vibrierende Winkelbewegung ausführt (sich schnell vor und zurück dreht), was zu einer weiteren Aufheizung des Fluids führt. Gemäß weiteren Ausführungsbeispielen werden im Stillstand der Drehstrommaschine wechselnde D-Ströme Id erzeugt, die nur zu Längskräften 210 (entlang der longitudinalen Achse des Magneten 125) führen, aber keine Drehbewegung erzeugen. In beiden Fällen kann eine schnelle Umpolung erfolgen, die zu Hysterese-Verluste und somit zu einer Aufheizung des Motors führen, ohne dass ein fortlaufendes Drehmoment (mit einem bestimmten Vorzeichen) erzeugt wird.

Beim Übergang in den Arbeitsmodus wird dann der q-Strom Iq erzeugt, der ein Drehmoment im Rotor 120 erzeugt. Der d-Strom Id kann, muss aber nicht sofort abgeschaltet werden. Erst wenn die Drehstrommaschine ihre Betriebstemperatur erreicht hat, kann der verlustbehaftete d-Strom Id abgeschaltet werden.

Gemäß Ausführungsbeispielen können also die drei Ströme durch die drei Spulen 111, 112, 113 derart gewählt werden, dass im Heizmodus kein q-Strom Iq erzeugt wird, dafür aber ein möglichst hoher und schnell veränderlicher d-Strom Id erzeugt wird, während im Arbeitsmodus ein großer q-Strom Iq erzeugt wird und der d-Strom Id möglichst vermieden wird. Auf diese Weise kann eine maximale Wirkleistung durch die Drehstrommaschine nach wie vor für einen vorgegebenen Strom sichergestellt werden.

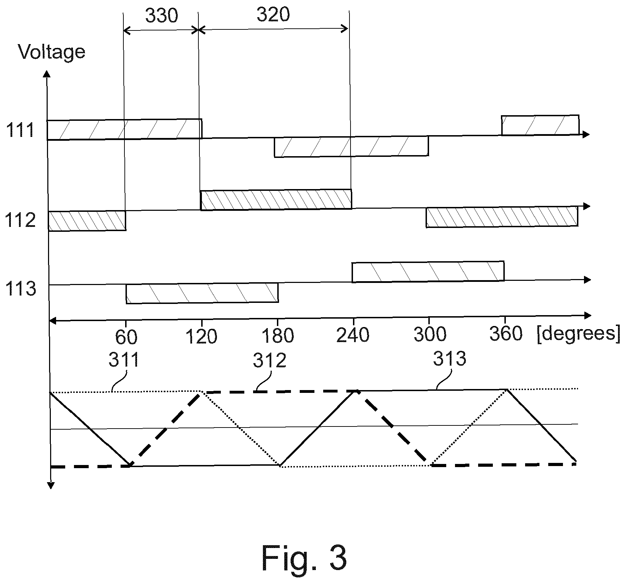

**Fig. 3** zeigt das Schalten der Gleichspannungen an den unterschiedlichen Spulen 111, 112, 113. Es sind Spannungsverläufe für die jeweiligen Spulen 111, 112, 113 dargestellt, die hier jedoch als Funktion des Winkels des Rotors 120 (bzw. des Magneten 125) dargestellt sind. In der Darstellung oben ist zunächst der Spannungsverlauf für die erste Spule 111 exemplarisch dargestellt, die sich zunächst auf der Pluspolarität +VCC befindet, die bei einem Winkel von 120° abgeschaltet wird. Beim Winkel von 180° wird die Minuspolarität -VCC an die erste Spule 111 angelegt und bleibt dort bis zu einem Winkel von 300° bestehen. Dann wird erneut die Spannung an der ersten Spule 111 abgeschaltet und erst bei einem Winkel von 360° wird beispielsweise erneut +VCC angelegt.

Die zweite Spule 112 wird analog hierzu angesteuert, wobei die Signale um 60° phasenverschoben sind, das heißt an der zweite Spule 112 liegt zunächst -VCC an, und zwar bis zum Winkel von 60°. Zwischen den Winkeln 60° und 120° wird keine Spannung angelegt. Zwischen 120° und 240° liegt +VCC an. Zwischen 240° und 300° wird keine Spannung angelegt und zwischen 300° und 330° liegt -VCC an.

Die dritte Spule 113 weist erneut das gleiche Muster auf, wobei wiederum eine Phasenverschiebung um 60° vorliegt, das heißt bei einem Winkel von 60° wird -VCC an die dritte Spule 113 angelegt und bleibt dort bis zu einem Winkel von 180° angelegt. Zwischen 180° und 240° wird keine Spannung angelegt. Zwischen 240° und 360° wird +VCC angelegt, die dann bei 360° erneut ausgeschaltet wird.

In dem Bild darunter ist sind die Spannungsverläufe 311, 312, 313 für die einzelnen Spulen 111, 112, 113 überlagert dargestellt, ein erster Spannungsverlauf 311 zeigt die Spannungswechsel der ersten Spule 111, ein zweiter Spannungsverlauf 312 zeigt die Spannungswechsel der zweiten Spule 112, ein dritter Spannungsverlauf 313 zeigt die Spannungswechsel der dritten Spule 113. Zwischen der Pluspolarität +VCC und der Minuspolarität -VCC sind lineare Flanken jeweils ausgebildet. Dort wird aktiv keine Spannung angelegt, aber das dort anliegende Potential ändert sich in der Schaltung von allein, wobei das nicht zwingenderweise linear erfolgt.

Die Phasenverschiebung um 60° führt dazu, dass grundsätzlich zu jedem Zeitpunkt an genau einer der drei Spulen 111, 112, 113 eine positive Spannung (+VCC) und an einer der drei Spulen 111, 112, 113 die negative Spannung (-VCC) anliegt. An der jeweils verbleibenden Spule ist keine definierte Spannung gekoppelt.

Gemäß Ausführungsbeispielen stört die Steuereinrichtung 130 diese Symmetrie gezielt. Beispielsweise kann die Steuereinrichtung 130 hierzu eine Aktivierungsdauer 320 der Spulen 111, 112, 113, d.h. die Zeiten, wo dort +VCC oder -VCC anliegt, gezielt ändern. Die Aktivierungsdauer kann zum Beispiel kontinuierlich vergrößert oder verringert werden. Analog kann die Abschaltdauer 330 (wo kein Potential an den Spulen angelegt wird) kontinuierlich verringert werden. Somit steuert die Steuereinrichtung 130 die Flankensteilheit beim Polaritätswechsel, der schneller geschieht (in weniger als 60° der Drehbewegung). Beispielsweise kann die Abschaltdauer 330 nur noch 40° oder 20° oder 0° betragen. Wenn das für alle Spulen gemacht wird, kommt es zu entgegengesetzt wirkenden Kräften, die dann, wie oben beschrieben, keine (reine) Drehkraft erzeugen können, sondern in radialer Richtung wirken (in Richtung der Magnetrichtung des Magneten 125). Um dies zu erreichen, erzeugt die Steuereinrichtung 130 die D-Ströme Id, die gemäß Ausführungsbeispielen zum Aufheizen des Fluids im Innenraum 50 genutzt werden können. Insbesondere kann die Ansteuerung derart erfolgen, dass die Drehbewegung des Rotors 120 blockiert wird bzw. höchstens Vibrationen erzeugt werden.

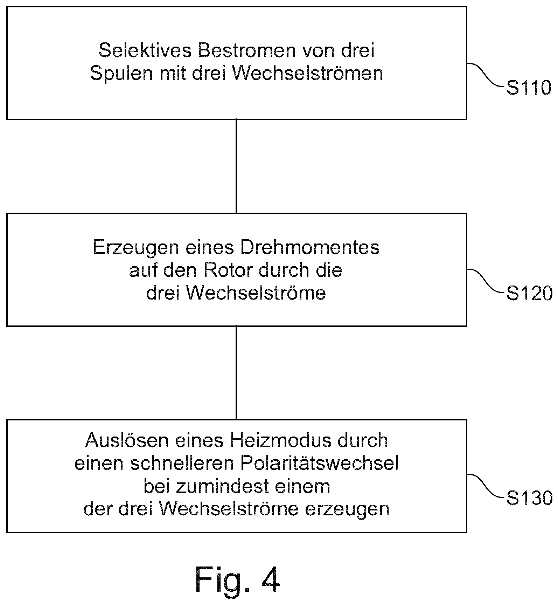

**Fig. 4** zeigt ein schematisches Flussdiagramm für ein Verfahren zur Ansteuerung der Drehstrommaschine gemäß Ausführungsbeispielen. Das Verfahren umfasst die Schritte:
- Selektives Bestromen S110 von drei Spulen 111, 112, 113 mit drei Wechselströmen;
- Erzeugen S120, in einem Arbeitsmodus, eines Drehmomentes M auf den Rotor 120 durch die drei Wechselströme; und
- Auslösen S130 eines Heizmodus, in dem die drei Wechselströme eine im Vergleich zum Arbeitsmodus erhöhte Verlustleistung durch einen schnelleren Polaritätswechsel bei zumindest einem der drei Wechselströme aufweisen.

Es versteht sich, dass alle zuvor beschriebenen Funktionen der Steuereinrichtung 130 als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte bedeutet. Die Schritte können auch in einer anderen Reihenfolge ausgeführt werden, oder es wird nur ein Teil der Verfahrensschritte ausgeführt.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Vorteilhafte Aspekte von Ausführungsbeispielen können wie folgt zusammengefasst werden. Die gewünschte Erwärmung wird durch das schnelle Ändern des Magnetfeldes erreicht. Dies führt zu den gewünschten Eisen-/Hystereseverlusten. Diese Wärme wird in den Luftspalt (Innenraum 50) übertragen, wo sich das Fluid (z.B. ein Öl oder eine andere Flüssigkeit) erwärmt, wodurch sich seine Viskosität verringert. Wenn die Steuereinrichtung 130 die Drehstrommaschine in dem Heizmodus betreibt, kann sie hierzu die Flankensteilheit 131, 133 zwischen den Polaritätswechseln entsprechend vergrößern, was gleichbedeutend dazu ist, dass die Abschaltdauern 330 der Spulen verkürzt werden. Über die so erreichte Geschwindigkeit des Polaritätswechsels können die Verluste eingestellt werden bzw. die Wärmeerzeugung durch die Drehstrommaschine kontrolliert werden. Je schneller die Polarität wechselt, umso schneller ändert sich die Magnetisierung in den Materialien, was zu höheren Verlusten und somit zu einer Wärmeerzeugung führt.

Um diesen Effekt zu verstärken, werden gemäß Ausführungsbeispielen Materialien für die Motor-Lamination 116 angepasst. Beispielsweise kann ein Material mit höheren Hysterese-Verlusten genommen, was für konventionelle E-Motoren als qualitativ minderwertig angesehen wird und daher vermieden wird. Gemäß Ausführungsbeispielen können beispielsweise zumindest eines der folgenden Materialien für die Motor-Lamination 116 genutzt werden: Kohlenstoffstahl, Edelstahl, Manganstahl, Siliziumstahl.

Die Verwendung von Blechen mit höheren Verlusten in Kombination mit dem schnellen Umschalten des Id-Stroms beim Start begünstigt die schnelle Erwärmung, die Ausführungsbeispiele erreichen. Ausführungsbeispiele bietet auch bei E-Motoren mit niedrigen Ohm'schen Widerständen die Möglichkeit der Erwärmung von Flüssigkeiten im Innenraum 50.

Ein weiterer Vorteil ist, dass Ausführungsbeispiele überall dort eingesetzt werden können, wo sich im Luftspalt 50 des Motors eine Flüssigkeit befindet, deren Viskosität bei niedrigeren Umgebungstemperaturen zunimmt.

Ausführungsbeispiele können zwei Hauptbestandteile kombinieren. Der eine liegt in der Konstruktion des Motors (der Drehstrommaschine), wo ein Material mit höheren Hystereseverlusten gewählt werden kann, um die Erwärmung bei niedrigeren Temperaturen zu erhöhen. Der zweite Teil betrifft die Steuerung durch die Steuereinrichtung 130, die durch ein schnelles Umschalten des Vorzeichens des Gleichstroms beim Anfahren des Systems die Aufheizung steuert.

Da ein aufwendiger Werkzeugbau für das Rotorblech nicht erforderlich ist, ergibt sich auch ein Kostenvorteil für die Herstellung der Drehstrommaschinen oder von E-Motoren.

Ausführungsbeispiele sind beispielsweise anwendbar in der elektrischen Servolenkung, wo der Betrieb zwischen -40°C und +85°C Umgebungstemperatur notwendig ist. Um den Wirkungsgrad des Motors zu erhöhen und die Erwärmung bei z.B. 85°C zu reduzieren, werden die Ohm'schen Verluste eines beispielhaften Permanentmagnet-Synchronmotor (PMSM) niedrig gehalten. Bei niedrigen Temperaturen wird die beispielhafte Hydraulikflüssigkeit der konventionellen Servolenkung im Luftspalt sehr zähflüssig, was dazu führt, dass ein sehr hohes Drehmoment zum Antrieb der Pumpe beim Anfahren erforderlich ist. Da die ohmschen Verluste gering sind, erfolgt die Erwärmung dieser konventionellen Hydraulik nur langsam. Ausführungsbeispiele verbessern die Situation deutlich, da durch die Ansteuerung nur eine zeitlich begrenzte Aufheizung möglich ist.

Wie bereits dargelegt nutzen Ausführungsbeispiele hierfür die Hystereseverluste in der Lamination des Stators 110 und/oder des Rotors 120. Diese werden durch schnelles Umschalten des Vorzeichens des angelegten Gleichstroms (+VCC zu -VCC und umgekehrt) erreicht. Diese Verluste erzeugen zusätzliche Wärme, sodass die Bleche der Motor-Lamination 116 selbst als Wärmequelle wirken. Die Lamination 116 gibt dann ihre Wärme an den Luftspalt 50 ab. Dadurch wird die Viskosität der Hydraulikflüssigkeit schneller reduziert, so dass der Motor schneller in den normalen Betriebsmodus übergehen kann.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 50: Innenraum
- 60: Welle
- 110: Stator
- 111, 112, 113: zumindest drei Spulen
- 116: Motor-Lamination
- 120: Rotor
- 125: zumindest ein Magnet
- 130: Steuereinrichtung (Controller, elektronische Steuereinheit)
- 131: Flankensteilheit (Winkel) im Arbeitsmodus
- 132: Spannungsverlauf im Arbeitsmodus
- 133: Flankensteilheit (Winkel) im Heizmodus
- 134: Spannungsverlauf im Heizmodus
- 135: Wärmbrücke(n)
- 136: Stromschienen (busbars)
- 210: radiale Kraft
- 220: Drehkraft
- 230, 241,241: drehender Magnetflussvektor (erzeugt von Iq)
- 311,312,313: Spannungsverläufe an den Spulen
- 320: Einschaltdauer
- 330: Abschaltdauer
- R: Drehachse
- M: Drehmoment
- Id: d-Strom (Heizstrom)
- Iq: q-Strom (Arbeitsstrom)
- +VCC: Pluspolarität (einer anliegenden Gleichspannung)
- -VCC: Minuspolarität (einer anliegenden Gleichspannung)

## Patentansprüche

1. Drehstrommaschine, die zumindest teilweise in einem Fluid läuft und einen Stator (110) mit zumindest drei Spulen (111, 112, 123) und einen Rotor (120) mit zumindest einem Magneten (125) aufweist, wobei der Rotor (120) von den zumindest drei Spulen (111, 112, 123) in einer Querschnittsebene senkrecht zu seiner Drehachse (R) umgeben ist,
**gekennzeichnet durch**
eine Steuereinrichtung (130), die ausgebildet ist, um
- die drei Spulen (111, 112, 113) selektiv mit drei Wechselströmen zu bestromen,
- einen Arbeitsmodus auszulösen, in dem die drei Wechselströme ein Drehmoment (M) um die Drehachse (R) auf den Rotor (120) erzeugen,
- einen Heizmodus auszulösen, in dem die drei Wechselströme eine im Vergleich zum Arbeitsmodus erhöhte Verlustleistung durch einen schnelleren Polaritätswechsel bei zumindest einem der drei Wechselströme erzeugen.

2. Drehstrommaschine nach Anspruch 1, wobei die Steuereinrichtung (130) ausgebildet ist, um die Drehstrommaschine alternativ im Arbeitsmodus oder im Heizmodus zu betreiben, wobei im Heizmodus kein Drehmoment (M) erzeugt wird.

3. Drehstrommaschine nach Anspruch 1 oder Anspruch 2, die an eine Quelle für eine Gleichspannung anschließbar ist, wobei die Steuereinrichtung (130) weiter ausgebildet ist, um die Gleichspannung mit wechselnden Polaritäten (+VCC, -VCC) an die zumindest drei Spulen anzulegen und eine Flankensteilheit (131, 133) beim Wechsel der Polarität im Heizmodus im Vergleich zum Arbeitsmodus zu erhöhen.

4. Drehstrommaschine nach Anspruch 3, wobei die Steuereinrichtung (130) ausgebildet ist, um die Gleichspannung mit den wechselnden Polaritäten (+VCC, -VCC) durch eine Pulsweitenmodulation gesteuerter Amplituden an die zumindest drei Spulen anzulegen.

5. Drehstrommaschine nach einem der Ansprüche 1 bis 4, wobei die drei Wechselströme in einem mit dem Rotor beweglichen Koordinatensystem in einem d-Strom (Id) und einen q-Strom (Iq) kombinierbar sind, wobei der d-Strom (Id) einen Magnetfluss erzeugt, der kein Drehmoment (M) im Rotor (120) erzeugt, und der q-Strom (Iq) einen Magnetfluss erzeugt, der ein Drehmoment (M) im Rotor (120) erzeugt, wobei die Steuereinrichtung (130) ausgebildet ist, um im Heizmodus den d-Strom (Id) zu erzeugen.

6. Drehstrommaschine nach einem der Ansprüche 1 bis 5, wobei der Stator (110) und/oder der Rotor (120) eine Motor-Lamination (116) aus zumindest eines der folgenden Materialien aufweist: Kohlenstoffstahl, Edelstahl, Manganstahl, Siliziumstahl, M12- oder M15-Siliziumstahlbleche.

7. Drehstrommaschine nach einem der Ansprüche 1 bis 6, wobei Stator (110) und/oder der Rotor (120) eine Motor-Lamination aufweist, die an vorbestimmten Stellen Kurzschlüsse zwischen Blechen der Motor-Lamination in axialer Richtung aufweist, um die Wirbelstromverluste kontrolliert zu steigern.

8. Drehstrommaschine nach einem der Ansprüche 1 bis 7, wobei die Steuereinrichtung (130) eine Kühleinrichtung mit Wärmebrücken (135) umfasst, die die erzeugte Wärme an den Innenraum (50) abführen.

9. Drehstrommaschine nach einem der Ansprüche 1 bis 8, der als ein Permanentmagnet-Synchronmotor ausgebildet ist.

10. Hydraulische Pumpe für eine Hydraulikflüssigkeit mit einer Drehstrommaschine nach einem der Ansprüche 1 bis 9, wobei der Innenraum (50) einen Teil der Hydraulikflüssigkeit aufweist und Dichtungen aufweist, um den Innenraum (50) mit Hydraulikflüssigkeit von Steuereinrichtung (130) abzudichten.

11. Fahrzeugsystem mit einer hydraulischen Pumpe nach Anspruch 10 oder einer Drehstrommaschine nach einem der Ansprüche 1 bis 9.

12. Fahrzeugsystem nach Anspruch 11, welches zumindest eines aus dem Folgenden ist: eine Servolenkung, ein Bremssystem, System mit einem Kugelgewindetrieb, Kupplungssteller mit Kugelgewindetrieb.

13. Fahrzeug, insbesondere ein Lastkraftwagen, mit einer Drehstrommaschine nach einem der Ansprüche 1 bis 9 und/oder einem Fahrzeugsystem nach Anspruch 11 oder Anspruch 12.

14. Verfahren zum Ansteuern einer Drehstrommaschine nach Anspruch 1, mit folgenden Schritten:
- Selektives Bestromen (S110) von drei Spulen (111, 112, 113) mit drei Wechselströmen;
- Erzeugen (S120), in einem Arbeitsmodus, eines Drehmomentes (M) auf den Rotor (120) durch die drei Wechselströme; und
- Auslösen (S130) eines Heizmodus, in dem die drei Wechselströme eine im Vergleich zum Arbeitsmodus erhöhte Verlustleistung durch einen schnelleren Polaritätswechsel bei zumindest einem der drei Wechselströme erzeugen.

15. Verfahren nach Anspruch 14, wobei im Heizmodus eine im Vergleich zum Arbeitsmodus erhöhte Amplitude bei zumindest einem der drei Wechselströme erzeugt wird.

16. Computerlesbares Speichermedium mit darauf gespeicherten Anweisungen, die ausgebildet sind, um die Steuereinrichtung (130) der Drehstrommaschine nach Anspruch 1 zu veranlassen, das Verfahren nach Anspruch 14 auszuführen, wenn die Anweisungen auf einer Datenverarbeitungseinheit ausgeführt werden.
